# EUROPEAN PATENT APPLICATION

(11) **EP 1 174 685 A1**
(43) Date of publication of application: **23.01.2002**
(21) Application number: 01117387.9
(22) Date of filing: 18.07.2001
(51) Int. Cl.: G01C 21/36

(54) **Method and apparatus for providing geographical regions for point of interest selection**

(30) Priority: 19.07.2000 US 618972
(71) Applicant: Visteon Global Technologies, Inc., Dearborn, Michigan 48126-2490 (US)
(72) Inventor: Desai, Simon, Sunnyvale, CA 94085-4144 (US); Armann, Kenneth, Santa Clara, CA 95051 (US)
(74) Representative: Patentanwälte Dr. Solf & Zapf

(57) **Abstract**

A method of and a system for finding points of interest in a navigation system are disclosed. In one embodiment, a first region is defined to comprise a first city and a second city. The second city and a third city are in a second region. In response to a user requesting for points of interest in the first region, the points of interest in the first city and in the second city are provided.

In another embodiment, a points of interest category is selected. A first area to search for the points of interest category is selected. The first area has zero or more common points of interest with a second area. The second area is a neighboring area of the first area. A search result for the points of interest in the first area is provided based on the selected points of interest category.

In another embodiment, a navigation system includes a processor and a first storage unit coupled with the processor. The first storage unit has a map database comprising points of interest information. A second storage unit is coupled with the processor. The second storage unit has computer instructions stored therein which, when executed by the processor, cause the processor to perform a points of interest search of the map database using a points of interest category and a search area identifier associated with a search area provided by a user. The search area has zero or more common points of interest with a neighboring area. The processor provides a search result for the points of interest in the search area based on the points of interest category.

## Description

### FIELD OF THE INVENTION

The present invention relates generally to field of vehicle navigation systems. More specifically, the present invention is directed to on-board automobile navigation systems for guiding the driver of an automobile to a desired destination.

### BACKGROUND OF THE INVENTION

An on-board vehicle navigation system can be useful for assisting the driver of an automobile in navigation. An example of an on-board automobile navigation system is a system, which provides the driver with a visual display of a street map of a certain area, using a stored map database, and indicates the position and movement of the vehicle as the vehicle travels. In response to the driver's selecting a destination from the database, the system computes a best route from a starting location to the destination. A built-in sensor measures the movement of the vehicle and record the distance traveled. An electronic signal from the speedometer and software in the vehicle translate the location information into maps and routes. The system provides directional instructions to the driver to guide the driver to the destination. The instructions are given in the form of recorded or synthesized speech.

Automobile navigation systems like the one described above may use a technique known as "dead reckoning" to estimate the position of the vehicle as the vehicle travels. In dead-reckoning, the heading of the vehicle and the distance traveled from a previously calculated position are first determined based on data received from on-board sensors (e.g., compass and odometer). A new position of the vehicle is then estimated by applying the measured parameters to well-known equations. Dead reckoning is subject to certain sources of error, however, which accumulates as the vehicle travels. Therefore, the estimated position of the vehicle is periodically compared to the street map database and adjusted to correct for such error. The navigation system may also include a high-accuracy positioning system, such as Global Positioning System (GPS) or the like. The map database is a key component to the reliability of the navigation system. The map database has to be accurate and up-to-date for a system to work properly. The map database usually comes on CD-ROM or DVD.

The map database generally provides detailed driving information for most of the major metropolitan areas. The map database may also provide Points of Interest information to assist the user to locate a particular place. The Points of Interest information may be provided in multiple categories. For example, the categories for the Points of Interest may include airports, banks, police stations, schools, Chinese restaurants, etc. In one conventional navigation system, the user selects a city and a Points of Interest category. For example, the user may use the Points of Interest information to find out the locations of all the Chinese restaurants within the city of San Francisco.

Certain problems are associated with the implementation of the Points of Interest method as provided in the prior art, however. For example, for a user in the city of Mountain View, California who wants to use the navigation system to locate a French restaurant, assuming that there is no French restaurant in the city of Mountain View, the response from the navigation system would be negative. However, what the user does not know is that there is a French restaurant in the city of Sunnyvale, a neighboring city. In such case, the navigation system in the prior art requires the user to select another city until a French restaurant is found. This requirement may discourage the user from selecting another city because, for example, the user may not know the name of the other city or the user just gives up searching for a French restaurant. This is one disadvantage of the prior art Points of Interest method.

In addition, using the above example, the prior art Points of Interest method may successfully find location information for French restaurants in the searched city (e.g., Mountain View), yet these restaurants may be at the far end of the city requiring the user to travel a significant distance to get there. What the prior art Points of Interest method fails to provide is an indication that there is a French restaurant located a shorter distance away in a neighboring city (e.g., Sunnyvale). Since most people don't know the clear boundaries between neighboring cities, the performance of the navigation system may be perceived by the user as faulty and not user friendly.

Another approach in the prior art method is to ask for the closest French restaurants to the current location. This approach uses a crows fly distance to determine the closest French restaurant, not taking into account the road network to get there. For example, in the San Francisco Bay Area, the closest French restaurant may require the user of the navigation system to take a bridge to get to another area, even though that area is closer.

What is needed is a technique for improving the accuracy of the Points of Interest information.

### SUMMARY OF THE INVENTION

A method of and a system for finding points of interest in a navigation system are disclosed. In one embodiment, a point of interest category is selected. A first area to search for the points of interest category is selected. The first area has zero or more common points of interest with a second area. The second area is a neighboring area of the first area. A search result for the points of interest in the first area is provided based on the selected points of interest category.

In another embodiment, a navigation system includes a processor and a first storage unit coupled with the processor. The first storage unit has a map database comprising points of interest information. A second storage unit is coupled with the processor. The second storage unit has computer instructions stored therein which, when executed by the processor, cause the processor to perform a points of interest search of the map database using a points of interest category and a search area identifier associated with a search area provided by a user. The search area has zero or more common points of interest with a neighboring area. The processor provides a search result for the points of interest in the search area based on the points of interest category. Other features of the present invention will be apparent from the accompanying drawings and from the detailed description, which follows.

### BRIEF DESCRIPTION OF THE DRAWINGS

The present invention is illustrated by way of example in the following drawings in which like references indicate similar elements. The following drawings disclose various embodiments of the present invention for purposes of illustration only and are not intended to limit the scope of the invention:
**Figure 1** is an exemplary flow diagram illustrating one embodiment of the Points of Interest method of the present invention;
**Figure 2** is an exemplary map illustrating regions and region boundaries;
**Figure 3** is an exemplary map illustrating sub-regions;
**Figure 4** illustrates an exemplary set of menus presented by one embodiment of a navigation system implemented with the method of the present invention; and
**Figure 5** is a block diagram of an on-board automobile navigation system.

### DETAILED DESCRIPTION

A method of providing Points of Interest information in a navigation system to a user is described. Most people think of an area in terms of regions, such as, for example, down town of San Francisco, East side of Los Angeles, Silicon Valley, Northern California, etc. The Points of interest method in which the present invention is implemented is used to assist a driver or passenger of an automobile equipped with a navigation system, or a user of a portable navigation system (hereinafter, "user") to better locate desired points of interest or locations in a commonly known region. The prior art map database in navigation systems does not support this concept of region.

An area covered by a region is usually "unofficially" defined and becomes known over a long period of time. People generally recognize the region when it is referred to. Some regions cover a large area, such as, for example, Northern California, and may include two or more cities. Some regions are smaller (sub-region), such as, for example, East Los Angeles, and may cover a small area within a city. A region may overlap another region, such as, for example, Northern California and Southern California. Similarly, a sub-region may overlap another sub-region. Those skilled in the art will recognize that there are several other alternatives to define the region and sub-region without departing from the scope of the present invention. Because the regions or sub-regions are usually "unofficially" defined, it is often difficult to clearly state their boundaries. Each region or sub-region is said to have "fuzzy" boundaries. For example, a particular French restaurant may be considered by one person to be in a region called North Los Angeles, but another person may consider that same French restaurant to be located in a neighboring region such as, for example, Central Los Angeles. The boundaries of the region are fuzzy because they may be changed depending on various factors affecting the local areas within the region or outside the region.

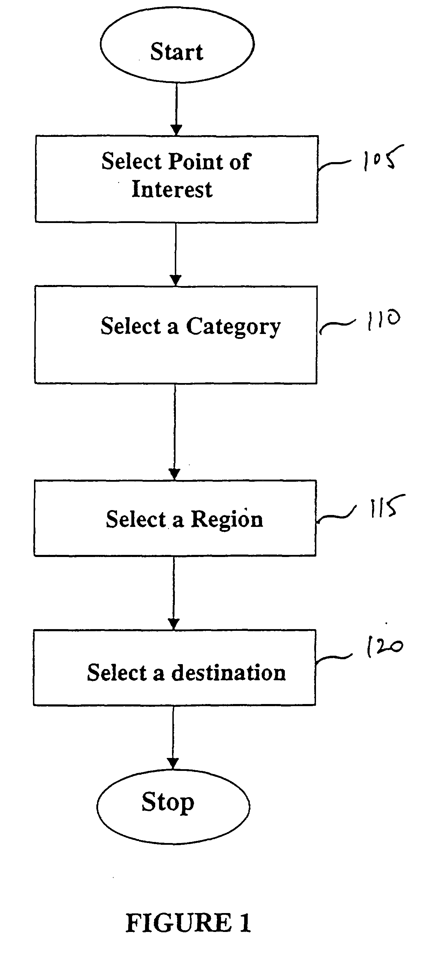

**Figure 1** is an exemplary flow diagram illustrating one embodiment of the Points of Interest method of the present invention. At block 105, the user selects a Points of Interest option presented by the navigation system. The Points of Interest information associated with this option has been updated to include regional points of interest. The user may want to search the Points of interest by category, as shown in block 110. The available categories may include, for example, police station, hospital, school, museum, etc. The navigation system may then provide the user with the option of where to search for the selected category. The option may provide a list of city names and region names. At block 115, the user selects a region name, such as, for example, San Francisco Peninsula. The navigation system then presents to the user a search result listing all the points of interest found in the selected category within the selected region. At block 120, the user selects a specific point of interest from the search result as a destination.

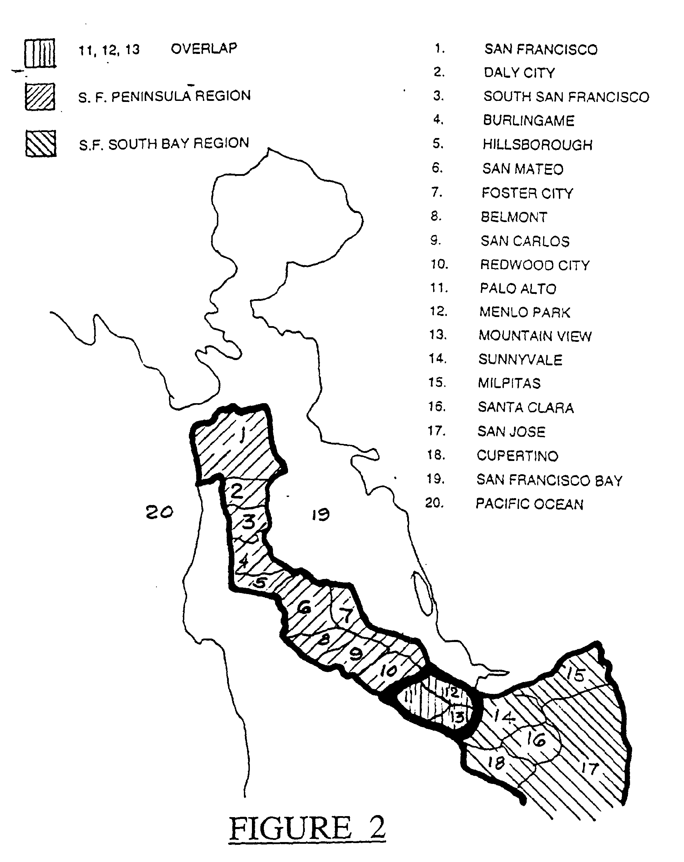

**Figure 2** is an exemplary map illustrating regions and region boundaries for the San Francisco bay area. The regions illustrated in **Figure 2** include the San Francisco Peninsula region and the San Francisco South Bay region. Each of these regions covers multiple cities. For example, the San Francisco Peninsula region covers the cities 1-13, and the San Francisco South Bay region covers the cities 11-18. Both regions cover the cities 11, 12 and 13 because they may be considered by some to be in the San Francisco Peninsula region and they may be considered by others to be in the San Francisco South Bay region. In one embodiment, the points of interest within a region include all the points of interests defined by category within each of the cities covered by the region. In another embodiment, the points of interest within an overlap area between two regions are included in both regions. For example, a French restaurant in the city of Daly City 2 and a French restaurant in the city of Palo Alto 11 will be included in a result for a search for French restaurants in the San Francisco Peninsula region. Similarly, the same search in the San Francisco South Bay region will provide a French restaurant in the city of San Jose 17 and the French restaurant in the city of Palo Alto 11. Since the city of Palo Alto 11, in this example, falls into the overlap area of the two regions, the French restaurant in the city of Palo Alto is included in both regions.

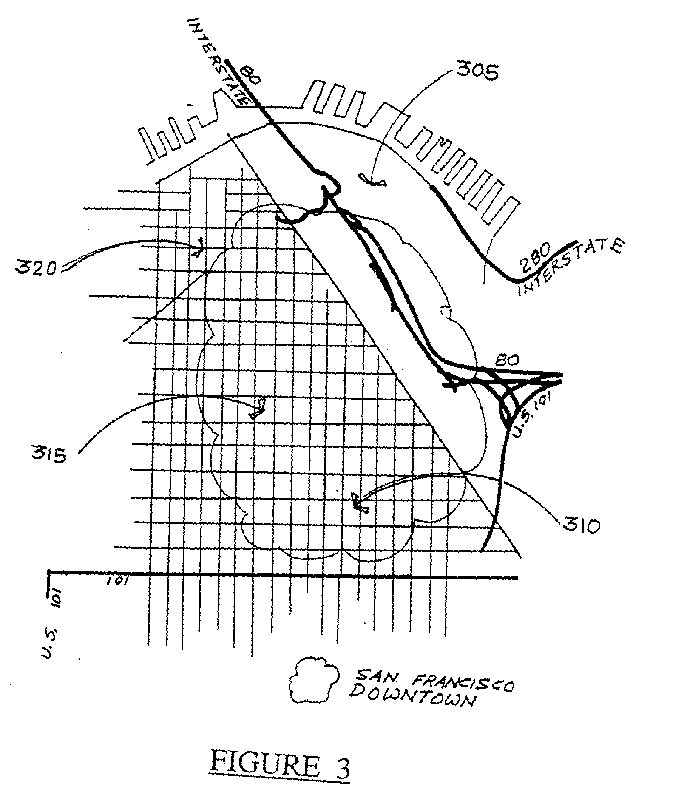

**Figure 3** is an exemplary map illustrating sub-regions in the general area of the San Francisco downtown. The sub-regions illustrated in **Figure 3** include the Fisherman's Wharf 305, the financial district 310, Chinatown 315, and Nob Hill 320. The exemplary map of Figure 3 illustrates the sub-regions that are included in a city such as, for example, the city of San Francisco. Using the flow diagram of **Figure 1**, the user of the navigation system implemented with the Points of Interest method of the present invention will be able to more effectively search for a French restaurant in the Fisherman Wharf area 305, rather than in the entire city of San Francisco. As in the previous example, there may be fuzzy boundaries in each of these sub-regions and a point of interest is included in two or more sub-regions when these sub-regions overlap.

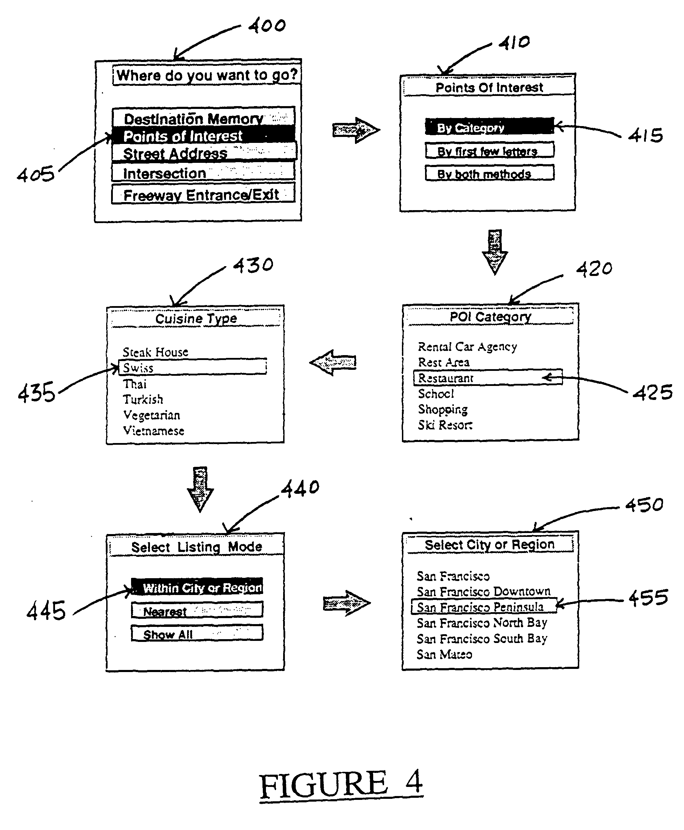

**Figure 4** illustrates an exemplary set of menus presented by one embodiment of a navigation system implemented with the method of the present invention. The menus are shown in the ascending order from the menu 400 to the menu 450 and are meant to illustrate exemplary options available to the user of the navigation system. At the menu 400, the user selects the "Points of Interest" option 405 and is presented with the menu 410. At the Points of Interest menu 410, the user selects the "By Category" option 415, which tells the navigation system that the user prefers to search the points of interest by categories. At the menu 420, the available Points of Interest categories are presented to the user. In this example, the user selects the "Restaurant" category 425 and is presented with the more detail cuisine type menu 430. When the user selects the "Swiss" cuisine type 425, the navigation system provides the user the select listing mode menu 440. It is in this select listing mode menu 440 that the user begins to see the advantage of the Points of Interest search as implemented by the method of the present invention. In one embodiment, the option 445 indicates that the user can select the listing mode to be "Within City or Region". Alternatively, the option 445 may be split into two options, one for "Within City" and another for "Within Region". After selecting the option 445, the user is presented with the menu 450 to choose a city or a region to begin the search for the points of interest. In one embodiment, the menu 450 provides both the names of cities and names of regions. In another embodiment, when the menu 440 provides separate options for "City" and for "Region", the corresponding menu 450 will provide only city names or only region names. In another embodiment, the menu 450 includes both the names of regions and the names of sub-regions.

In another embodiment, the method of the present invention may be used to find an intersection in a region or sub-region. For example, the user may want to find out a cross street with a known street within a particular region. The known street may be long and may go through one or more regions. Using the navigation system implemented with the present method, the user may specify the name of the known street and the region that the user is interested to find an intersection with the known street. The navigation system then performs the search of the street database for the specified region. The search result then includes a list of streets intersected with the known street within the specified region.

In another embodiment, the method of the present invention may also be used in an off-board navigation system. For example, the method may be implemented in a network based navigation system, such as, for example, a web-based navigation system. The network based navigatipn system is supported by a network server on a network. The user may access the network based navigation system through a connection using a client system such as, for example, a client computer, a cell phone, or a personal digital assistant (PDA). Various conventional connection methods such as, for example, wireless, may be used by the user to access the network-based navigation system to search for the region or sub-region described above. Those skilled in the art will recognize that the method of the present invention may also be used in other applications without departing from the scope of the invention.

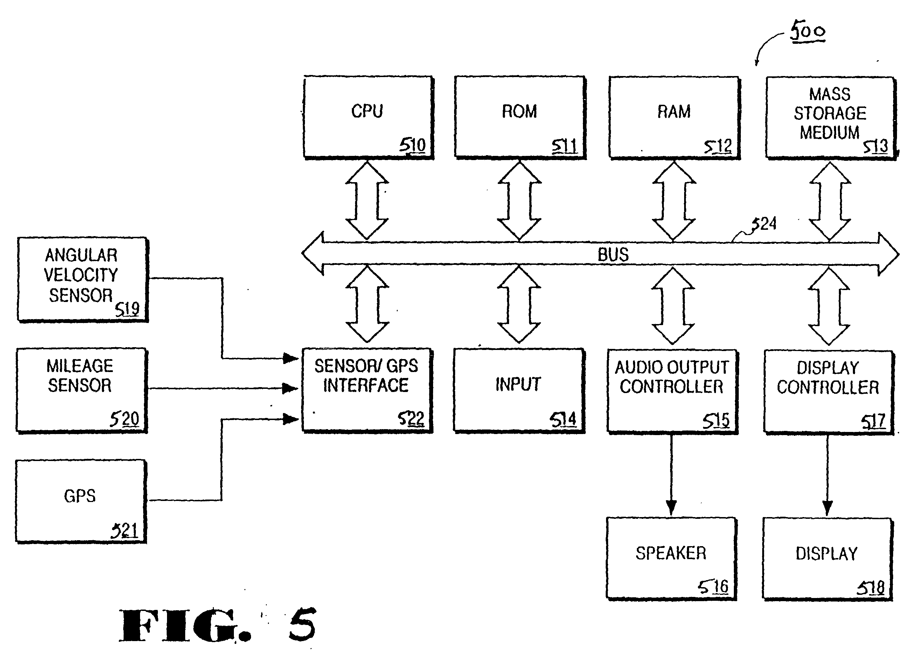

**Figure 5** illustrates a navigation system, in which the present invention can be implemented. Generally, the system 500 provides a visual display of a street map of a geographic area and an indication of the position and movement of the vehicle. In response to the user's inputting a desired destination, the system computes a best route from a starting location to the destination and then provides navigation instructions to the driver to guide the driver to the destination. In one embodiment, the user selects the destination from a list of possible destinations provided by the system 500. The navigation instructions are provided in the form of digitized or synthesized speech. The instructions can also be provided visually in an alternate display mode, in which the next maneuver is indicated in the form of an arrow symbol and/or text.

The system 500 includes a central processing unit (CPU) 510, read-only memory (ROM) 511, random access memory (RAM) 512, and a mass storage medium 513, all coupled together by a bus 524. The CPU 510 controls operation of the system 500 by executing instructions stored in ROM 511, RAM 512, or both. For example, instructions stored in ROM 511 may be copied to RAM 512 for execution by the CPU 510. RAM 512 may include static RAM (SRAM), which receives power from the vehicle's battery to maintain its stored data when the vehicle's engine is off. ROM 511 is non-volatile memory, some or all of which may be erasable and/or reprogrammable. For example, ROM 511 may be flash memory, electrically erasable programmable ROM (EEPROM), or any other suitable form of programmable-erasable non-volatile memory. Mass storage medium 513 may comprise a magnetic, optical, or other form of non-volatile storage device suitable for storing large quantities of data.

The system 500 also includes several sensors 519, 520, and 521 to provide data for purposes of dead reckoning. In particular, the system 500 includes an angular velocity sensor 519, a mileage sensor (e.g., an odometer) 520, and a Global Positioning System (GPS) locator 521. Each of sensors 519-521 is coupled to an interface 522, which is coupled to the bus 524. Interface 522 includes various circuitries for interfacing sensors 519-521 to the bus 524, such as analog-to-digital converters. The system 500 also includes an input unit 514 that is coupled to the bus 524. The input unit 514 includes various controls such as buttons (which may be mechanical in nature) by which the user can enter commands and data into the system 500, such as when selecting a destination or various output options. The system 500 outputs digitized or synthesized audio navigation instructions to the user via a speaker 516. The speaker 516 is coupled to the bus 524 via an audio output controller 515. A visual display is provided to the user via a display device 518 that is coupled to the bus 524 by a display controller 517. The display device 518 may be a liquid crystal display (LCD), a cathode ray tube (CRT), or any other suitable form of display device.

The system 500 uses "dead reckoning" in combination with a map-matching algorithm to accurately determine the position of the vehicle on roads of a street map. The street map is provided by a stored map database. Mass storage medium 513 stores the map database containing streets and points of interest for a given geographic area. In addition to the prior art points of interest listing mode, the map database also provides the region and sub-region listing modes described above. In one embodiment, the region and the sub-region listing mode are provided as individual listing modes. In another embodiment, the region and sub-region listing modes are provided together with the city-listing mode. Those skilled in the art will recognize that other alternatives may be used to implement the listing mode for the region and the sub-region without departing from the scope of the present invention.

Operation of the navigation system, including the Points of Interest method described herein, may be an implemented using software, e.g., by instructions stored in ROM 511, RAM 512, or mass storage device 513 (or a combination thereof) and executed by CPU 510. Alternatively, certain operations, including the Points of Interest method, may be implemented using only hardwired circuitry.

From the above description and drawings, it will be understood by those of ordinary skill in the art that the particular embodiments shown and described are for purposes of illustration only and are not intended to limit the scope of the invention. Those of ordinary skill in the art will recognize that the invention may be embodied in other specific forms without departing from its spirit or essential characteristics. References to details of particular embodiments are not intended to limit the scope of the claims.

## Claims

1. In a navigation system, a method comprising:
defining a first region comprising a first city and a second city, wherein the second city is in a second region; and
in response to a user requesting for a list of one or more cross streets to a known street in the first region, providing a list of the one or more cross streets in the first city and in the second city.

2. The method of claim 1, wherein the first region overlaps with the second region.

3. The method of claim 1, further comprising in response to the user requesting for a list of one or more cross streets to the known street in the second region, providing the list of the one or more cross streets to the known street in the second city, wherein the known street goes through the first city and the second city.

4. The method of claim 1, wherein the user requesting for the list of one or more cross streets to the known street in the first region comprises:
specifying the known street, and
selecting the first region.

5. The method of claim 1, wherein the user requests for the list of one or more cross streets from an on-board navigation system.

6. The method of claim 1, wherein the user requests for the list of one or more cross streets from a portable navigation system.

7. The method of claim 1, wherein the user requests for the list of one or more cross streets from a client device coupled with a network-based navigation system.

8. The method of claim 6, wherein the client device is one in a group comprising a client computer and a handheld device.

9. The method of claim 8, wherein the handheld device is one in a group comprising a cell phone and a personal digital assistant.
